# EUROPÄISCHE PATENTANMELDUNG

(11) **EP 0 856 249 A2**
(43) Veröffentlichungstag der Anmeldung: **05.08.1998**
(21) Anmeldenummer: 98100838.6
(22) Anmeldetag: 20.01.1998
(51) Int. Cl.: A01G 13/10

(54) **Vorrichtung zur Verhinderung von Schälschäden an Laub- und Nadelbäumen**

(30) Priorität: 31.01.1997 AT 150/97
(71) Anmelder: Heeb, Albin, 9464 Lienz (CH)
(72) Erfinder: Heeb, Albin, 9464 Lienz (CH)
(74) Vertreter: Hefel, Herbert, Dipl.-Ing.

(57) **Zusammenfassung**

Die Vorrichtung dient zur Verhinderung von Schälschäden an Laub- und Nadelbäumen. Sie besteht aus mindestens einem Bündel (1) von Fasern oder Garnen (2), das an einem oder mehreren Ästen (3) bzw. unmittelbar am Stamm (5) eines zu schützenden Baumes (4) angebracht ist. Die Fasern bzw. Garne (2) des Bündes (1) umgeben den Stamm (5) des zu schützenden Baumes (4). Die entlang des Stammes (5) des zu schützenden Baumes (4) herabhängenden und den Stamm (5) umgebenden Fasern bzw. Garne (2) des Bündels (1) sind in vertikalen Abständen am Stamm (5) beispielsweise durch umlaufende Schnüre oder Bänder (7) festgelegt. Die Fasern bzw. Garne (2) des Bündels (1) sind in ihrem Längsmittelbereich oder endseitig verklebt, verschweißt oder verschnürt. Die Fasern bzw. Garne (2) des Bündels (1) sind aus Pflanzen (Sisal, Hanf) gewonnen oder können auch aus Kunststoff oder Glasfasern bestehen.

## Beschreibung

Die Erfindung bezieht sich auf eine Vorrichtung zur Verhinderung von Schälschäden an Laub- und Nadelbäumen.

Es ist bekannt, daß das Rotwild junge Nadel- bzw. Laubbäume in den Wäldern durch Schälen beschädigt. Um diesen Schäden zu begegnen, wurden Schälschutznetze entwickelt. Es handelt sich hier um ein bandförmiges Kunststoffnetz, das spiralförmig um die zu schützenden Stämme gewickelt wird. Durch ihre Dehnbarkeit passen sich diese Schälschutznetze auch in gewissem Umfang dem Wachstum des Stammes an. Diese Schälschutznetze erfüllen zwar die ihnen zugedachte Aufgabe, ihre Anbringung und spätere Entfernung ist jedoch sehr aufwendig. Diese bandförmigen Netze werden in Rollen geliefert. Das Schälschutznetz wird im oberen Bereich am Stamm angelegt und durch Überwickeln der ersten Lage gehalten. Dann wird die Rolle von oben nach unten direkt am Stamm entlang geführt, wobei sich die einzelnen Lagen etwas überlappen sollen. Da die zu schützenden Stämme auch Äste tragen, ist dieses Bewickeln des Stammes in der genannten Art sehr umständlich und zeitaufwendig. In der Regel muß der Stamm bis zu 2 m Höhe bewickelt werden. Da die Breite des bandförmigen Netzes ca. 15 cm beträgt und sich die einzelnen Windungen auch noch überlappen sollen, müssen pro Stamm mindestens 15 Windungen dieses bandartigen Netzes aufgebracht werden.

Schneidet man zur Erleichterung der Netzmontage die Äste im unteren Stammbereich bis auf eine Höhe von ca. 200 bis 250 cm ab, so beeinträchtigt dies die spätere Holzqualität, weil diese Aststummeln nicht optimal vernarben und sogenannte Asteinwüchse verursachen. Bei Jungbäumen bis zu 80 mm Durchmesser müßten zudem alle begrünten und wachstumsfördernden Äste entfernt werden. Dies ist aus waldpflegerischer Sicht nicht annehmbar.

Hier setzt die Erfindung ein, die darauf abzielt, eine Vorrichtung dieser Art vorzuschlagen, die nicht nur einfacher im Aufbau ist und daher mit geringeren Kosten hergestellt werden kann als ein Netz, sondern die vor allem einfach zu verlegen ist und das Wachstum des Stammes nicht behindert. Eine Vorrichtung für diesen Zweck ist erfindungsgemäß gekennzeichnet durch mindestens ein Bündel von Fasern oder Garnen, das an einem Ast oder mehreren Ästen bzw. unmittelbar am Stamm des zu schützenden Baumes aufgehängt ist und die Fasern bzw. Garne des Bündels den Stamm des zu schützenden Baumes umgeben.

Anhand der Zeichnung wird die Erfindung näher veranschaulicht. Es zeigen:
- Fig. 1: ein in die Ebene ausgebreitetes Bündel aus Fasern bzw. Garnen;
- Fig. 2: schematisch die Anordnung dieses Bündels aus Fasern bzw. Garnen an einem Baum;
- Fig. 3: einen Querschnitt nach der Linie III-III in Fig. 2;
- Fig. 4: zwei Fasern oder Garne in einem gegenüber den anderen Figuren erheblich vergrößerten Maßstab;
- Fig. 5: schematisch eine weitere Möglichkeit zur Anordnung des Bündels aus Fasern bzw. Garnen an einem Baum.

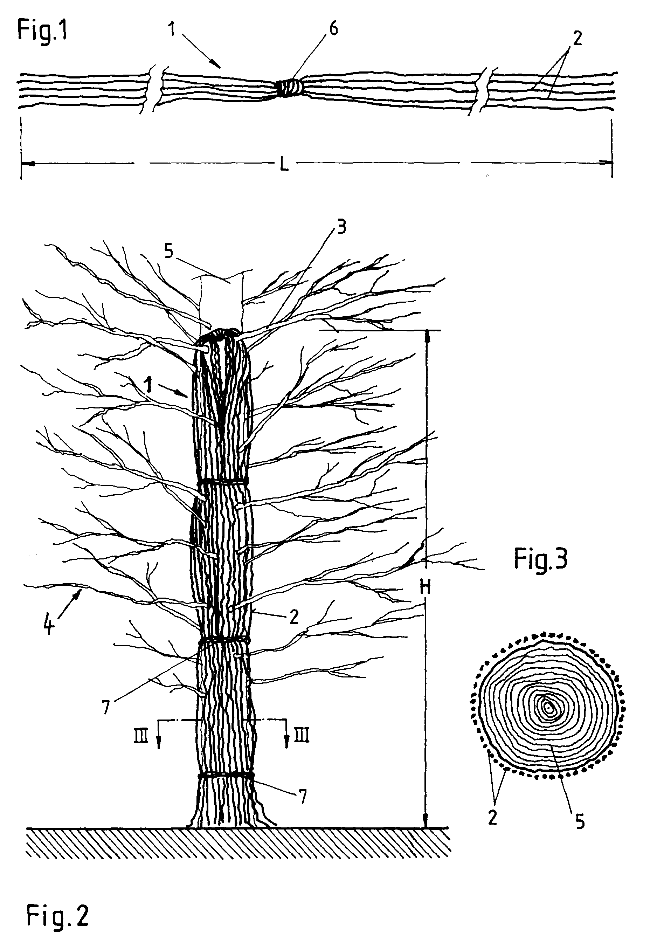

Fig. 1 veranschaulicht ein in die Ebene ausgebreitetes Bündel 1 aus Fasern bzw. Garnen 2 mit einer Länge L von ca. 4 bis 5 m. Unter Fasern werden alle textilen Faserstoffe verstanden, unabhängig davon, ob sie praktisch endlose oder längenbegrenzte Gebilde sind. Damit werden z. B. unter dem Begriff "Chemiefasern" sowohl die Endlosgarne wie die Spinnfasern und alle weiteren Herstellungsformen verstanden. Vergleichbares gilt auch für den Begriff "Garn", der ein praktisch endloses, fadenförmiges Gebilde bezeichnet und beschreibt, das aus endlichen Fasern (Gespinst) oder aus mehreren, praktisch endlosen Elementarfäden (Chemieseide, Haspelseide) bestehen kann. Solche Fasern und Garne können aus Bast, Baumwolle, Glasfasern, Chemiefasern oder Chemiegarnen, aus Haaren, Seiden, Wolle oder Zellwolle bestehen. Im Längsmittelbereich dieses Bündels 1 sind die Garne bzw. Fasern 2 gefaßt, beispielsweise verklebt, verschnürt oder verschweißt. Diese Verbindung im Mittelbereich des Bündels 1 dient ausschließlich der leichteren Handhabung desselben, für die dem Bündel aus Fasern oder Garnen zugedachte Funktion hat diese Verbindung keine Relevanz. Sind die Fasern bzw. Garne 2 aus natürlichen Rohstoffen gewonnen, so ist es evtl. zweckmäßig, sie zu imprägnieren, um ihre Lebensdauer zu erhöhen.

Anstelle eines Bündels aus Fasern oder Garnen, das in seiner Längsmitte verschweißt, verklebt oder verschnürt ist, können die ein Bündel bildenden Fasern oder Garne auch nur an einem ihrer Enden in der beschriebenen Weise gefaßt sein. Die Länge L eines solchen Bündels ist dann etwa halb so groß als die eines mittig gefaßten Bündels. Ein solches Bündel wird erhalten, wenn beispielsweise das in Figur 1 gezeigte Bündel in seiner Längsmitte durchschnitten wird.

Ein oder mehrere solcher Bündel 1 aus Fasern oder Garnen 2 werden nun in geeigneter Höhe H (ca. 2 bis 2,5 m) an den Ästen 3 eines zu schützenden Baumes 4 aufgehängt, und zwar unmittelbar in jenem Bereich, in dem der Ast 3 aus dem Stamm 5 des Baumes 4 wächst. Der Bereich 6, in dem das Bündel 1 aus den Fasern oder Garnen 2 verschnürt oder verklebt ist, liegt dabei zweckmäßigerweise im Nahbereich des Astes 3 oder auf diesem auf, so daß zu beiden Seiten des Astes 3 Fasern und Garne 2 frei herabhängen, und zwar nahe dem Stamm 4 (Fig. 3). Um zu verhindern, daß Luftströmungen diese Fasern oder Garne verwehen, ist es zweckmäßig, diese herabhängenden Fasern oder Garne 2 in vertikalen Abständen am Stamm festzulegen, beispielsweise mit einer Schnur 7, die locker um den Stamm 5 gebunden werden kann. Hiezu wird eine gegebenenfalls dehnbare Schnur verwendet, die ein- oder zweimal um den Stamm gewickelt und mit ihren Enden verschnürt wird. Wie Fig. 3 zeigt, sind diese Fasern bzw. Garne in lockerer und willkürlicher Anordnung um den Stamm 5 herum verteilt. Die Erfahrung zeigt, daß diese Bündel aus Fasern oder Garnen 2 einen ganz hervorragenden Schutz gegen schälendes Rotwild bilden.

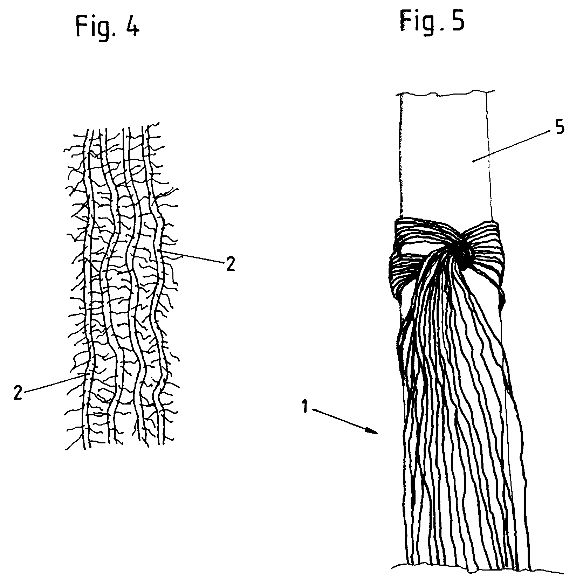

Die vertikal hängenden Stränge weisen in der Regel einzelne abstehende Elementarfäden unterschiedlicher Länge und in verschiedene Richtungen abstehend auf, die einen zusätzlichen abweisenden und abstoßenden Effekt auf das Wild verursachen. Dies zeigt Fig. 4 schematisch in einem gegenüber den anderen Figuren erheblich vergrößerten Maßstab.

Diese hier beschriebenen Bündel 1 aus Fasern oder Garnen 2 sind äußerst einfach herzustellen. Ebenso ist ihre Verlegung einfach, da diese Bündel ja nur an den Ästen aufgehängt werden müssen. Für die Fasern bzw. Garne können grobe Gebilde verwendet werden, die mit geringem Aufwand herstellbar sind.

Bei Laubbäumen ist eine schlaufenartige Befestigung am Stamm vorgesehen (Fig. 5). Laubbäume haben im unteren Stammbereich relativ wenig Äste, an welchen das Bündel aufhängbarwäre. Darüberhinaus sind diese evtl. spärlich vorgesehenen Äste noch sehr unregelmäßig angeordnet.

## Patentansprüche

1. Vorrichtung zur Verhinderung von Schälschäden an Laub- und Nadelbäumen, gekennzeichnet durch mindestens ein Bündel (1) von Fasern oder Garnen (2), das an einem oder mehreren Ästen (3) bzw. unmittelbar am Stamm (5) des zu schützenden Baumes (4) aufgehängt ist und die Fasern bzw. Garne (2) des Bündels (1) den Stamm (5) des zu schützenden Baumes (4) umgeben.

2. Vorrichtung nach Anspruch 1, dadurch gekennzeichnet, daß das Bündel (1) von Fasern bzw. Garnen (2) in seinem Längsmittelbereich verklebt, verschweißt oder verschnürt ist.

3. Vorrichtung nach Anspruch 1, dadurch gekennzeichnet, daß die das Bündel (1) bildenden Fasern oder Garne (2) endseitig miteinander verklebt, verschweißt oder verschnürt sind.

4. Vorrichtung nach Anspruch 1 oder 2, dadurch gekennzeichnet, daß die Fasern bzw. Garne (2) des Bündels (1) aus Pflanzen (Sisal, Hanf) gewonnen sind.

5. Vorrichtung nach Anspruch 1 oder 2, dadurch gekennzeichnet, daß die Fasern bzw. Garne (2) des Bündels (1) aus Kunststoff oder Glasfasern bestehen.

6. Vorrichtung nach Anspruch 1, dadurch gekennzeichnet, daß die Fasern oder Garne (2) des Bündels (1) imprägniert sind.

7. Vorrichtung nach einem der Ansprüche 1 bis 6, dadurch gekennzeichnet, daß die von einem oder mehreren Ästen (3) des zu schützenden Baumes (4) entlang dessen Stammes (5) herabhängenden und den Stamm (5) umgebenden Fasern bzw. Garne (2) des Bündels (1) in vertikalen Abständen am Stamm (5) beispielsweise durch umlaufende Bänder (7) festgelegt sind.
